(19) Europäisches Patentamt
European Patent Office
Office européen des brevets

(11) **EP 3 252 093 B1**

(12) **EUROPEAN PATENT SPECIFICATION**

(45) Date of publication and mention of the grant of the patent:
**27.04.2022 Bulletin 2022/17**

(21) Application number: **15880083.9**

(22) Date of filing: **12.11.2015**

(51) International Patent Classification (IPC):
*C08J 5/04* *(2006.01)*    *B29B 11/16* *(2006.01)*
*D04H 1/4242* *(2012.01)*    *D04H 1/74* *(2006.01)*

(52) Cooperative Patent Classification (CPC):
**B29C 70/508; B29C 70/12; B29C 70/506**

(86) International application number:
**PCT/JP2015/081877**

(87) International publication number:
**WO 2016/121191 (04.08.2016 Gazette 2016/31)**

(54) **REINFORCING FIBRE COMPOSITE MATERIAL**

FASERVERSTÄRKTER VERBUNDSTOFF

MATÉRIAU COMPOSITE À FIBRES DE RENFORCEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2015 JP 2015016856**

(43) Date of publication of application:
**06.12.2017 Bulletin 2017/49**

(73) Proprietor: **Toray Industries, Inc.**
**Tokyo 103-8666 (JP)**

(72) Inventors:
• **MIYOSHI, Katsuhiro**
**Nagoya-shi**
**Aichi 455-8502 (JP)**
• **HASHIMOTO, Takafumi**
**Nagoya-shi**
**Aichi 455-8502 (JP)**
• **MOTOHASHI, Tetsuya**
**Nagoya-shi**
**Aichi 455-8502 (JP)**
• **BAMBA, Kenta**
**Nagoya-shi**
**Aichi 455-8502 (JP)**

(74) Representative: **Hoefer & Partner Patentanwälte mbB**
**Pilgersheimer Straße 20**
**81543 München (DE)**

(56) References cited:
**EP-A1- 2 151 418        WO-A1-2004/030897**
**WO-A1-2008/149615        WO-A1-2011/056293**
**JP-A- 2006 501 085        JP-A- 2009 062 474**
**JP-A- 2009 062 474        JP-A- 2009 191 116**
**JP-A- 2009 209 269**

## Description

Technical Field of the Invention

The present invention relates to a reinforcing fiber composite material composed of discontinuous reinforcing fibers and a matrix resin, and specifically, to a reinforcing fiber composite material which is excellent in two-dimensional isotropy and uniformity by including discontinuous reinforcing fibers at a specified formation, that has not been present in the conventional technologies, in the reinforcing fiber composite material, and which enables to exhibit both high flowability and mechanical properties when manufacturing a molded article using the same.

Background Art of the Invention

A reinforcing fiber composite material composed of reinforcing fibers and a matrix resin is used for manufacturing of various molded articles,, because high mechanical properties can be obtained, and the demand thereof in various fields is increasing year by year. EP2151418 A1 and JP2009062474 A disclose reinforcing fiber composite material comprising at least a matrix resin and discontinuous reinforcing fibers which include discontinuous reinforcing fiber aggregates.

As a molding method of a reinforcing fiber composite material having high functional properties, an autoclave molding is most commonly carried out wherein a semi-cured intermediate base material called as a prepreg, impregnated with a matrix resin into continuous reinforcing fibers, is laminated, and a continuous fiber reinforced composite material is molded in which the matrix resin is cured by heating and pressurizing the intermediate base material in a high-temperature high-pressure vessel. Further, recently, for the purpose of improving productivity, RTM (Resin Transfer Molding) or the like is carried out wherein a matrix resin is impregnated into a continuous fiber base material formed in advance in a member shape and cured. The reinforcing fiber composite materials obtained by these molding methods have excellent mechanical properties because of continuous fibers. In addition, because the continuous fibers are regularly arranged, it is possible to design mechanical properties to be required by the disposition of the base material, and the dispersion of the mechanical properties is small. On the other hand, however, it is difficult to form a complicated shape such as a three-dimensional shape because of continuous fibers, and it is mainly limited to a member close to a planar shape.

As molding methods suitable for complicated shapes such as three-dimensional shapes, molding using SMC (sheet molding compound) or stampable sheet and the like are available. An SMC molded article is obtained by cutting a strand of reinforcing fibers in a fiber orthogonal direction such that the fiber length becomes about 25 mm, impregnating the chopped strand with a matrix resin, which is a thermosetting resin, to obtain a semi-cured state sheet-like base material (SMC), and heating and pressurizing it using a heating type press machine. A stampable sheet molded article is obtained by once heating a sheet-like base material (stampable sheet) prepared by impregnating a thermoplastic resin into chopped strands cut to about 25 mm or a nonwoven fabric mat composed of discontinuous reinforcing fibers or the like up to a temperature of the melting point of the thermoplastic resin or higher, and cooling and pressurizing it with a mold of a predetermined temperature.

In many cases, the SMC or the stampable sheet is cut to a size smaller than the shape of a molded article before pressurization, it is placed on a mold, and the molding is performed by stretching (flowing) it to the shape of the molded article by pressurization. Therefore, due to the flow, it can follow to a complicated shape such as a three-dimensional shape. However, in an SMC or a stampable sheet, since unevenness of distribution and unevenness of orientation of the chopped strands and the nonwoven fabric mat are inevitably caused in the sheeting process, the mechanical properties are lowered or the dispersion of the values thereof becomes large. Furthermore, ascribed to the unevenness of distribution and the unevenness of orientation, sagging, sinking or the like is likely to occur particularly in thin members.

In order to fill the drawbacks of the above-described materials, for example, Patent documents 1 and 2 propose a carbon fiber mat in which a carbon fiber bundle is once widened and then divided in the width direction and cut, whereby a weight-average fiber width of specific carbon fiber bundles in the discontinuous carbon fiber mat is defined. However, dividing the carbon fiber bundle in the width direction as described in Patent documents 1 and 2 leads to an increase in the number of contact points between the carbon fibers in a carbon fiber composite material to be obtained, and the flowability is deteriorated. Further, the width and the thickness of the fiber aggregate in the carbon fiber mat are assumed on a premise that the fiber aggregate is formed as an approximately uniform columnar body having a rectangular or elliptical cross-sectional shape with respect to the longitudinal direction (fiber length direction) of the fiber aggregate, and the carbon fiber mat having a narrow fiber width is excellent in mechanical properties of a carbon fiber composite material molded article produced by using the carbon fiber mat as the fiber thickness is smaller, but the flowability at molding is low and the moldability is inferior. This is because the reinforcement effect of the carbon fiber is sufficiently exerted because the carbon fibers which are the reinforcing fibers are sufficiently dispersed so that the stress hardly concentrates, and on the other hand, the carbon fibers intersect each other to constrain the movement of each other, thereby becoming hard to move.

Further, since the carbon fiber mat having a wide fiber width tends to have a wide contact area between the fibers, restricts movement of each other and makes it difficult to move, the flowability during molding is difficult to be exhibited and the moldability is poor. Further, the greater the fiber thickness is, the better the flowability during molding of the carbon fiber composite material molded article produced using it is, but the followability to a mold for molding a molded article having a complicated shape such as a rib or small in thickness is poor, and the mechanical properties are low. This is because the carbon fiber bundle is thick, since the carbon fibers do not form a network, it is easy to move in the early stage of flowing, but when molding a molded article having a complicated shape such as a rib or the like or small in thickness, the carbon fiber bundles are entangled with each other, thereby hindering the flow of a matrix resin, and in addition, a stress concentration is liable to occur at the end portion of the carbon fiber bundle.

Furthermore, although Patent document 3 describes a carbon fiber composite material in which a strand is opened and then cut and impregnated with a thermosetting resin, and a manufacturing method thereof, as similarly to in Patent documents 1 and 2, the carbon fiber width and thickness are assumed on a premise that the fiber aggregate is formed as an approximately uniform columnar body having an approximately rectangular cross-sectional shape with respect to the longitudinal direction (fiber length direction) of the fiber aggregate, and in the carbon fiber sheet having a wide fiber width, the thicker the fiber thickness is, the better the flowability during molding of the carbon fiber composite material molded article produced by using it is, but the followability to a mold for molding a molded article having a complicated shape such as a rib or small in thickness is poor, and the mechanical properties are low. Further, the smaller the fiber thickness is, the better the mechanical properties of the carbon fiber composite material molded article produced by using it is, but the flowability is inferior.

Prior art documents

Patent documents

Patent document 1: WO2014 / 201315
Patent document 2: WO2014 / 021316
Patent document 3: JP-A- 2008-254191

Summary of the Invention

Problems to be solved by the Invention

Accordingly, an object of the present invention is to provide a reinforcing fiber composite material which makes it possible to achieve both high flowability during molding and high mechanical properties at a high level, which could not be achieved by conventional reinforcing fiber composite materials comprising reinforcing fibers and resins, and which has optimum conditions that exhibit excellent flowability and excellent mechanical properties particularly at the time of flow molding.

Means for solving the Problems

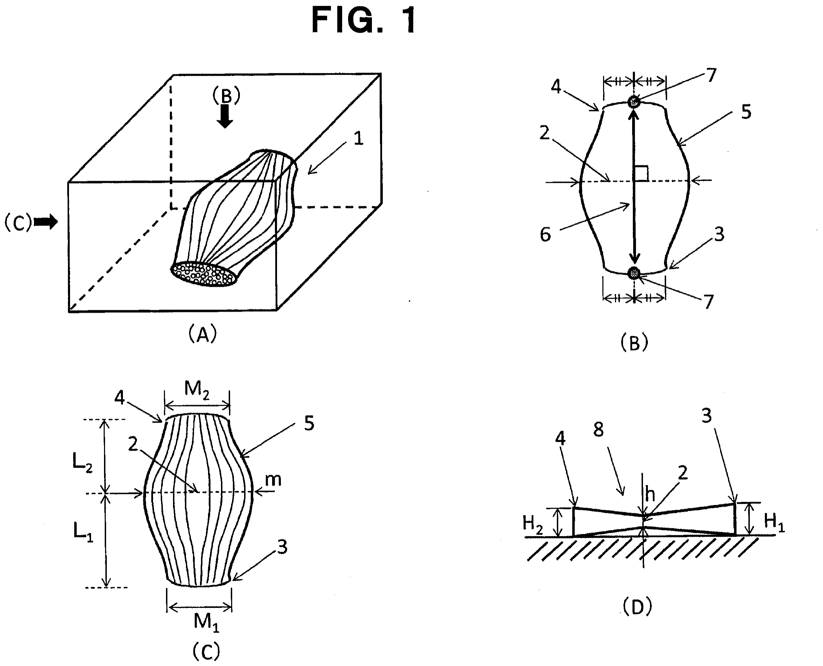

To achieve the above-described object, a reinforcing fiber composite material according to the present invention comprises at least a matrix resin and discontinuous reinforcing fibers which include discontinuous reinforcing fiber aggregates, and wherein the discontinuous reinforcing fibers include at least 5 wt% of discontinuous reinforcing fiber aggregates (A) in each of which a most widened section, where the width of the discontinuous reinforcing fiber aggregate in a direction intersecting an alignment direction of the discontinuous reinforcing fibers (a direction connected linearly with middle points at both ends of the discontinuous reinforcing fiber aggregate shown in Fig. 1(B) described later) is made greatest when the discontinuous reinforcing fiber aggregate is two-dimensionally projected, is present at a position excluding both ends of the discontinuous reinforcing fiber aggregate, and the aspect ratio of the most widened section (width of the discontinuous reinforcing fiber aggregate m/thickness of the discontinuous reinforcing fiber aggregate h, shown in Fig. 1 (C) and (D) described later) is 1.3 times or more the aspect ratio of at least one of the ends of the discontinuous reinforcing fiber aggregate (width of the discontinuous reinforcing fiber aggregate $M_n$/thickness of the discontinuous reinforcing fiber aggregate $H_n$, shown in Fig. 1 (C) and (D) described later, here, "n" indicates a position in any one end of the discontinuous reinforcing fiber aggregate, and n = 1 or 2), and characterized in that discontinuous reinforcing fiber aggregates, in each of which, with respect to a thickness of at least one of the ends and a thickness of the most widened section of said discontinuous reinforcing fiber aggregate (A), the thickness of the end /the thickness of the most widened section is 1.2 or more and less than 100, are included and wherein the discontinuous reinforcing fiber aggregates having the thickness of the end/ the thickness of the most widened section of 1.2 or more occupy 50% or more relative to the whole of the discontinuous reinforcing fiber aggregates (A).

In such a reinforcing fiber composite material according to the present invention, although the flowability of a composite material is usually lowered at the time of molding when reinforcing fibers are included in a matrix resin, the flowability reduction can be suppressed by increasing the amount of discontinuous reinforcing fibers which are in forms of aggregates, and it becomes possible to realize a good flowability. However, when the discontinuous reinforcing fiber aggregate has constant width and thickness of the aggregate with respect to the longitudinal direction (fiber alignment direction) of the discontinuous reinforcing fiber aggregate, for example, like a columnar body having a rectangular or ellipse cross-sectional shape with respect to the longitudinal direction, in case where the width of the aggregate is large, it is excellent in flowability, but it tends to be less likely to locally become two-dimensional isotropy. Further, in case where the width of the aggregate is small, it tends to become two-dimensional isotropy, but it tends to be inferior in flowability. Namely, considering comprehensively that the optimum form of discontinuous reinforcing fiber aggregate that attaches importance to good flowability and the optimum form of discontinuous reinforcing fiber aggregate that attaches importance to two-dimensional isotropy do not necessarily become the same form, the present invention optimizes the structure of discontinuous reinforcing fibers in a reinforcing fiber composite material so as to achieve particularly both good flowability and two-dimensional isotropy at a good balance.

In order to exhibit high flowability and two-dimensional isotropy, the aspect ratio at the most widened section of the discontinuous reinforcing fiber aggregate (A) included in the discontinuous reinforcing fibers is at least 1.3 times the aspect ratio at one end and preferably 20 times or less, more preferably 1.5 times or more, and further preferably 2 times or more. As the most widened section aspect ratio of discontinuous reinforcing fiber aggregate (A) increases relatively to that of an end, the matrix resin is liable to be impregnated into the discontinuous reinforcing fiber aggregate (A), and therefore, strength and elastic modulus are likely to be exhibited. Further, since the fibers are oriented in more directions than those in a columnar body having a rectangular or ellipse cross-sectional shape with respect to the longitudinal direction for forming the reinforcing fiber width and thickness with respect to the longitudinal direction (fiber length direction) of the fiber aggregate, the obtained reinforcing fiber composite material tends to become more two-dimensional isotropy.

Further, as the details will be described later, the discontinuous reinforcing fiber aggregate (A) is integrated at the end portion by entanglement of the reinforcing fibers with each other or by a sizing agent or the like adhering to the reinforcing fibers. Therefore, even if flowing is started in units of aggregates at the time of flow molding, particularly at the start of flow, and the discontinuous fiber aggregates are entangled with each other excessively during flowing to form a bridge that obstructs the flow of a matrix resin, because the most widened section is partially split and opened, by the sheer force of the matrix resin, the most widened section becomes the starting point, the discontinuous reinforcing fiber aggregate (A) tends to easily flow while being split and opened, it exhibits excellent flowability without obstructing the flow of the matrix resin.

The discontinuous reinforcing fiber aggregate (A) shows that when the aspect ratio of the most widened section is less than 1.3 times at least one end aspect ratio, it is difficult to cause fiber splitting and opening to the discontinuous reinforcing fiber aggregate (A) at the time of flow molding, the discontinuous fiber aggregates excessively interlace with each other, the flow of matrix resin is obstructed, thereby leading to deterioration of flowability, and when it exceeds 20 times, excessive widening is given, thereby leading to fluffing or fiber breakage of the discontinuous reinforcing fiber aggregate (A) and leading to a reduction in strength.

The discontinuous reinforcing fiber aggregates (A) contained in the reinforcing fiber composite material is preferably at least 5 wt% and 100 wt% or less relatively to the total amount of discontinuous reinforcing fibers contained in the reinforcing fiber composite material, more preferably 10 wt% or more, and further preferably 20 wt% or more. If it is less than 5 wt%, high flowability and two-dimensional isotropy exhibition effects due to the discontinuous reinforcing fiber aggregates (A) are insufficient. The discontinuous reinforcing fiber aggregate (A) according to the present invention is not a chopped strand in which single fibers such as fluffs are adhered to the chopped strand or a chopped strand widened and split with the chopped strand, but a discontinuous reinforcing fiber aggregate in which portions excluding both ends are intentionally split and widened.

In order to exhibit higher flowability and two-dimensional isotropy, it is preferred that as the above-described discontinuous reinforcing fiber aggregates (A), a discontinuous reinforcing fiber aggregate having an aspect ratio of more than 30 in the most widened section is included, and more preferably, more than 30 and less than 500. If the aspect ratio of the most widened section of the discontinuous reinforcing fiber aggregate is 30 or less, it is difficult to cause fiber splitting and opening to the discontinuous reinforcing fiber aggregate (A) at the time of flow molding, the discontinuous fiber aggregates excessively interlace with each other, the flow of matrix resin is obstructed, thereby leading to deterioration of flowability, and if it becomes 500 or more, widening is excessively given, thereby leading to fluffing or fiber breakage of the discontinuous reinforcing fiber aggregate (A) and leading to a reduction in strength.

Further, in order to more reliably exhibit high flowability, it is preferred that discontinuous reinforcing fiber aggregates, in each of which, with respect to a width of at least one of the ends and a width of the most widened section of said discontinuous reinforcing fiber aggregate (A) when said discontinuous reinforcing fiber aggregate (A) is two-dimensionally projected, the width of the most widened section/the width of the end is 1.3 or more, are included, and more preferably 1.3 or more and less than 50. Further preferably it is 1.5 or more, and still further preferably, 1.7 or more. With respect to the width of the end and the width of the most widened section of the discontinuous reinforcing fiber aggregate (A), if the width of the most widened section/the width of the end is less than 1.3, it is difficult to cause fiber splitting and opening to the discontinuous reinforcing fiber aggregate (A) at the time of flow molding, the discontinuous fiber aggregates excessively interlace with each other, the flow of matrix resin is obstructed, thereby leading to deterioration of flowability, and if it becomes 50 or more, widening is excessively given, thereby leading to fluffing or fiber breakage of the discontinuous reinforcing fiber aggregate (A) and leading to a reduction in strength.

Further, in order to reliably exhibit high flowability, it is preferred that discontinuous reinforcing fiber aggregates, in each of which, with respect to a thickness of at least one of the ends and a thickness of the most widened section of the discontinuous reinforcing fiber aggregate (A), the thickness of the end/the thickness of the most widened section is 1.2 or more, are included, more preferably 1.2 or more and less than 100. It is further preferably 1.5 or more. With respect to the thickness of at least one of the ends and the thickness of the most widened section of the discontinuous reinforcing fiber aggregate (A), the thickness of the end/the thickness of the most widened section becomes less than 1.2, it is difficult to cause fiber splitting and opening to the discontinuous reinforcing fiber aggregate (A) at the time of flow molding, the discontinuous fiber aggregates excessively interlace with each other, the flow of matrix resin is obstructed, thereby leading to deterioration of flowability, and if it becomes 100 or more, widening is excessively given, thereby leading to fluffing or fiber breakage of the discontinuous reinforcing fiber aggregate (A) and leading to a reduction in strength.

Furthermore, in order to achieve flowability and two-dimensional isotropy at a good balance, it is preferred that discontinuous reinforcing fiber aggregates, in each of which a widening angle calculated from a width of at least one of the ends and a width of the most widened section of the discontinuous reinforcing fiber aggregate (A) is more than 5°, are included, more preferably more than 5° and less than 90°. Here,

$$\text{widening angle} = \tan^{-1} \{(\text{width of most widened section} - \text{width of the end})/2/\text{distance between the end and the most widened section}\}$$

Further preferably, it is more than 8° and less than 85°. If the widening angle is 5° or less, the discontinuous fibers are aligned in an identical direction at a unit of aggregate, exhibition of two-dimensional isotropy is insufficient, and if more than 90°, widening is excessively given, thereby leading to fluffing or fiber breakage of the discontinuous reinforcing fiber aggregate (A) and leading to a reduction in strength.

Further, in order to achieve strength and flowability at a good balance, it is preferred that the number average fiber length of the discontinuous reinforcing fibers is 5 mm or more and less than 100 mm. If the number average fiber length is less than 5 mm, a reduction of strength is caused, and if the number average fiber length becomes 100 mm or more, the number of contact points between the reinforcing fibers increases, thereby leading to deterioration of flowability.

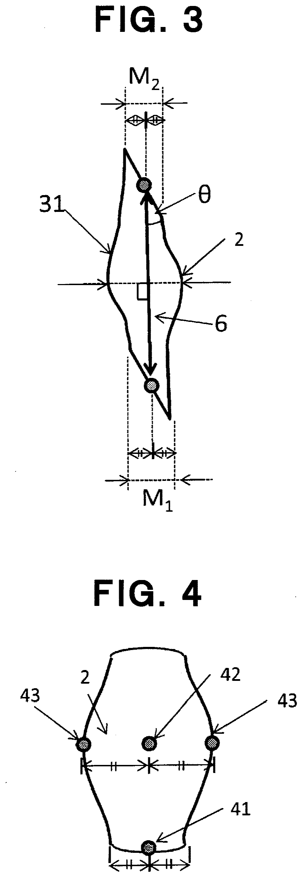

Further, in order to securely exhibit strength, it is preferred that both ends of the discontinuous reinforcing fiber aggregate (A) are cut with an angle θ of 2° to 30° relatively to the longitudinal direction of the discontinuous reinforcing fiber aggregate (the direction defined by linearly connecting the middle points of both ends of the discontinuous reinforcing fiber aggregate shown in Fig. 3 described later, and the alignment direction of the fibers). By cutting with an angle θ, the reinforcing fiber surface area at the end of the discontinuous reinforcing fiber aggregate (A) is increased, the stress concentrating at the ends of the discontinuous reinforcing fibers is relaxed, and the strength of a reinforcing fiber composite material is exhibited.

In the reinforcing fiber composite material according to the present invention, as the discontinuous reinforcing fibers, although it is possible to use any reinforcing fibers used for molding fiber-reinforced composites, in particular the invention is suitable to a case where the discontinuous reinforcing fibers comprise carbon fibers, or a case where carbon fibers are included as the discontinuous reinforcing fibers.

Effect according to the Invention

Thus, In the reinforcing fiber composite material according to the present invention, it is possible to provide an excellent reinforcing fiber composite material capable of achieving all of an excellent flowability at the time of molding, high mechanical properties and two-dimensional isotropy of a molded article at a good balance.

Brief explanation of the drawings

[Fig. 1] (A) is a perspective view showing an example of a discontinuous reinforcing fiber aggregate used in the present invention, (B) is a projection (to a horizontal plane) of the discontinuous reinforcing fiber aggregate shown in (A) and shows an example of fiber alignment direction, (C) is a two-dimensional projection to the direction of (B) (to a horizontal plane) of the discontinuous reinforcing fiber aggregate shown in (A), and (D) is a projection to the direction of (C) of the discontinuous reinforcing fiber aggregate shown in (A), respectively.

[Fig. 2] Fig. 2 is a schematic configuration diagram showing an example of a discontinuous reinforcing fiber sheet manufacturing apparatus used in the present invention.

[Fig. 3] Fig. 3 is a schematic two-dimensional projection showing an example in which an end of a discontinuous reinforcing fiber aggregate in the present invention is cut with an angle $\theta$.

[Fig. 4] Fig. 4 is a schematic two-dimensional projection showing an example of the thickness measurement portions of the end and the most widened section of a discontinuous reinforcing fiber aggregate in the present invention.

Embodiments for carrying out the Invention

Hereinafter, the present invention will be explained in detail together with examples and comparative examples.

First, embodiments of the present invention and particularly preferred embodiments of the present invention will be explained.

In the reinforcing fiber composite material according to the present invention, the reinforcing fiber composite material is composed of discontinuous reinforcing fibers and a matrix resin. The discontinuous reinforcing fibers include at least discontinuous reinforcing fiber aggregates (A) at a predetermined rate, and the discontinuous reinforcing fiber aggregate (A) has a predetermined aggregate shape as shown in Fig. 1. In Fig. 1, (A) shows a discontinuous reinforcing fiber aggregate (A) 1 having a shape according to an example of such a predetermined aggregate shape, Fig. 1(B) is a projection 5 of the discontinuous reinforcing fiber aggregate (A) 1 shown in Fig. 1(A) to (B) direction (to a horizontal plane), and shows a most widened section 2, ends 3, 4, fiber alignment direction 6 , and the middle points 7 of the ends 3 and 4 of the discontinuous reinforcing fiber aggregate (A) 1. Fig. 1(C) is, similarly, a two-dimensional projection 5 of the discontinuous reinforcing fiber aggregate (A) 1 shown in Fig. 1(A) to (B) direction (to a horizontal plane), and shows the width m of the most widened section 2, the distances $L_1$ and $L_2$ from the most widened section 2 to the ends 3 and 4, and the widths $M_1$ and $M_2$ of the respective ends 3 and 4. Fig. 1(D) is a projection 8 from (C) direction of the discontinuous reinforcing fiber aggregate (A) 1 shown in Fig. 1(A), and shows the thickness h of the most widened section 2 and the thickness $H_n$ (n = 1, 2) of each of the respective ends 3 and 4.

In the discontinuous reinforcing fiber aggregate (A) according to the present invention, it is important that the most widened section, where the width of the discontinuous reinforcing fiber aggregate in a direction intersecting an alignment direction of the discontinuous reinforcing fibers is made greatest when the discontinuous reinforcing fiber aggregate is two-dimensionally projected, is present at a position excluding both ends of the discontinuous reinforcing fiber aggregate, and the aspect ratio (width of the discontinuous reinforcing fiber aggregate/thickness of the discontinuous reinforcing fiber aggregate) of the most widened section is 1.3 times or more the aspect ratio of at least one of the ends of the discontinuous reinforcing fiber aggregate. In the discontinuous reinforcing fiber aggregate (A), the aspect ratio of the most widened section is 1.3 times or more and preferably 20 times or less the aspect ratio of at least one end, more preferably 1.5 times or more, and further preferably 2 times or more.

Since the aspect ratio of the most widened section is at least 1.3 times the aspect ratio of at least one end, the matrix resin is easily impregnated into the discontinuous reinforcing fiber aggregate (A), and therefore, the strength and elastic modulus can be easily exhibited, and since in the discontinuous reinforcing fiber aggregate (A) the fibers in the discontinuous reinforcing fiber aggregate (A) are aligned in more directions than in a columnar body having a rectangular or ellipse cross-sectional shape, the obtained reinforcing fiber composite material tends to become more two-dimensionally isotropic. Further, since the discontinuous reinforcing fiber aggregate (A) is integrated at both ends by reinforcing fibers tangled with each other or by sizing agent adhering to the reinforcing fibers or the like, at the time of flow molding, particularly at the start of the flowing, even though the flow is started at units of aggregates, the discontinuous fiber aggregates are excessively entangled with each other during the flowing and the flow of the matrix resin is obstructed, by the condition where the aggregate is partially split and opened at the most widened section, by the shearing force of the matrix resin, the most widened section becomes a starting point, the discontinuous reinforcing fiber aggregate (A) is easy to flow while being split and opened, and exhibits excellent flowability without obstructing the flow of the matrix resin.

Further, by a condition where the aspect ratio of the most widened section is 20 times or less the aspect ratio of at least one end, the discontinuous reinforcing fiber aggregate is less likely to cause fluffing and fiber breakage due to widening, and it becomes possible to suppress the reduction of the strength. Furthermore, at the time of flow molding, concretely when the flow is started at the discontinuous reinforcing fiber aggregate units, by the condition where the most widened section is being split and opened, the most widened section becomes a starting point, the discontinuous reinforcing fiber aggregate (A) flows while being opened and split by the shearing force of the matrix resin, thereby exhibiting excellent flowability without obstructing the flow of the matrix resin. Besides, even in case of a complicated shape such as a rib, the discontinuous fibers opened and split from the discontinuous reinforcing fiber aggregate (A) during flowing are likely to flow in along the complicated shape, thereby exhibiting an excellent formability .

It is important that the discontinuous reinforcing fiber aggregates (A) included in the reinforcing fiber composite material is included at least at 5 wt% or more relatively to the total amount of discontinuous reinforcing fibers contained in the reinforcing fiber composite material. The discontinuous reinforcing fiber aggregates (A) are included preferably at 5 wt% or more and 100 wt% or less relatively to the total amount of discontinuous reinforcing fibers contained in the reinforcing fiber composite material. By the condition where the discontinuous reinforcing fiber aggregates (A) are included is contained at least at 5 wt% or more relatively to the total amount of discontinuous reinforcing fibers, high flowability and two-dimensional isotropy exhibition effect by the discontinuous reinforcing fiber aggregates (A) can be sufficiently exhibited. The amount of the discontinuous reinforcing fiber aggregates (A) is more preferably 10 wt% or more, and further preferably 20 wt% or more.

The discontinuous reinforcing fibers may include, other than the discontinuous reinforcing fiber aggregates (A), discontinuous reinforcing fibers opened up to a single fiber level which are made at the time of making a discontinuous reinforcing fiber sheet, chopped strands cut with a strand as it is, fiber-split chopped strands divided with a chopped strand in its width direction, chopped strands in which are partially divided and widened at positions excluding both ends but which do not satisfy forms of aggregates, widened chopped strands in each of which the whole of the chopped strand is widened, divided and widened chopped strands in each of which the whole of the chopped strand is widened and divided, or the like.

Further, it is preferred that the discontinuous reinforcing fiber aggregates (A) include a discontinuous reinforcing fiber aggregate having an aspect ratio of more than 30 in the most widened section. Further, with respect to the aspect ratio, it is more preferred that a discontinuous reinforcing fiber aggregate having an aspect ratio of more than 30 and less than 500 is included. By the condition where a discontinuous reinforcing fiber aggregate having an aspect ratio of more than 30 in the most widened section is included, because the fibers are aligned in more directions, a reinforcing fiber composite material to be obtained tends to become more two-dimensionally isotropic. Further, by the condition where a discontinuous reinforcing fiber aggregate having an aspect ratio of less than 500 in the most widened section is included, fluffing due to widening and fiber breakage are less likely to occur in the discontinuous reinforcing fiber aggregate, and reduction of strength can be suppressed. Where, it is preferred that the discontinuous reinforcing fiber aggregates having an aspect ratio of more than 30 occupy 50% or more relative to the whole of the discontinuous reinforcing fiber aggregates (A), more preferably 80% or more, and further preferably 90% or more. By the condition where most of the discontinuous reinforcing fiber aggregates (A) are composed of discontinuous reinforcing fiber aggregates having an aspect ratio of more than 30, the effect of easily making a reinforcing fiber composite material two-dimensionally isotropic can be exhibited, as aforementioned.

It is preferred that the above-described discontinuous reinforcing fiber aggregates (A) include discontinuous reinforcing fiber aggregates, in each of which, with respect to a width of at least one of the ends ($M_1$ or $M_2$ in Fig. 1(C)) and a width of the most widened section of the discontinuous reinforcing fiber aggregate (A) (m in Fig. 1(C)), the width of the most widened section/the width of the end is 1.3 or more. Further, it is more preferred to include discontinuous reinforcing fiber aggregates in each of which the width of the most widened section/the width of the end is 1.3 or more and less than 50. In the condition of including the discontinuous reinforcing fiber aggregates in each of which the width of the most widened section/the width of the end is 1.3 or more, at the time of flow molding, concretely when the flow is started at the discontinuous reinforcing fiber aggregate units, by the condition where the most widened section is being split and opened, the most widened section becomes a starting point, the discontinuous reinforcing fiber aggregate (A) flows while being opened and split by the shearing force of the matrix resin, thereby easily exhibiting excellent flowability without obstructing the flow of the matrix resin. Further, by the condition of including the discontinuous reinforcing fiber aggregates in each of which the width of the most widened section/the width of the end is less than 50, fluffing due to widening and fiber breakage are less likely to occur in the discontinuous reinforcing fiber aggregate, and reduction of strength can be suppressed. The width of the most widened section/the width of the end is more preferably 1.5 or more, and further preferably 1.7 or more.

Where, it is preferred that the discontinuous reinforcing fiber aggregates having the width of the most widened section/the width of the end of 1.3 or more occupy 50% or more relative to the whole of the discontinuous reinforcing fiber aggregates (A), more preferably 80% or more, and further preferably 90% or more. By the condition where most of the discontinuous reinforcing fiber aggregates (A) are composed of discontinuous reinforcing fiber aggregates having the width of the most widened section/the width of the end of 1.3 or more, the effect for achieving an excellent flowability can be exhibited, as aforementioned.

According to the invention the above-described discontinuous reinforcing fiber aggregates (A) include discontinuous reinforcing fiber aggregates, in each of which, with respect to a thickness of at least one of the ends ($H_1$ or $H_2$ in Fig. 1(D)) and a thickness of the most widened section (h in Fig. 1(D)), the thickness of the end/the thickness of the most widened section is 1.2 or more. Further, it is according to the invention to include discontinuous reinforcing fiber aggregates in each of which the thickness of the end/the thickness of the most widened section is 1.2 or more and less than 100. By the condition of including discontinuous reinforcing fiber aggregates in each of which the thickness of the end/the thickness of the most widened section is 1.2 or more, at the time of flow molding, concretely when the flow is started at the discontinuous reinforcing fiber aggregate units, by the condition where the most widened section is being split and opened, the most widened section becomes a starting point, the discontinuous reinforcing fiber aggregate (A) flows while being opened and split by the shearing force of the matrix resin, thereby easily exhibiting excellent flowability without obstructing the flow of the matrix resin. Further, by the condition of including the discontinuous reinforcing fiber aggregates in each of which the thickness of the end/the thickness of the most widened section is less than 100, fluffing due to widening and fiber breakage are less likely to occur in the discontinuous reinforcing fiber aggregate, and reduction of strength can be suppressed. The thickness of the end/the thickness of the most widened section is more preferably 1.5 or more. According to the invention the discontinuous reinforcing fiber aggregates having the thickness of the end/the thickness of the most widened section of 1.2 or more occupy 50% or more relative to the whole of the discontinuous reinforcing fiber aggregates (A), more preferably 80% or more, and further preferably 90% or more. By the condition where most of the discontinuous reinforcing fiber aggregates (A) are composed of discontinuous reinforcing fiber aggregates having the thickness of the end/the thickness of the most widened section of 1.2 or more, the effect for achieving an excellent flowability can be exhibited, as aforementioned.

It is preferred that the above-described discontinuous reinforcing fiber aggregates (A) include discontinuous reinforcing fiber aggregates in each of which a widening angle calculated from a width of at least one of the ends and a width of the most widened section is more than 5°. Further, it is more preferred to include discontinuous reinforcing fiber aggregates in each of which the widening angle calculated from a width of at least one of the ends and a width of the most widened section is more than 5° and less than 90°. Here, widening angle = $\tan^{-1}\{(m - M_n)/2/L_n\}$ (m is a width of most widened section, L is a distance between the end and the most widened section, n shows any one of the positions of the ends of the discontinuous reinforcing fiber aggregate, and n = 1 or 2.) By the condition of including discontinuous reinforcing fiber aggregates having a widening angle of more than 5°, an excellent flowability is exhibited without obstructing the flow of matrix resin, and in addition, because the discontinuous reinforcing fibers are oriented in a wider range, a reinforcing fiber composite material to be obtained becomes more two-dimensionally isotropic, and such a condition is preferable. By the condition of including discontinuous reinforcing fiber aggregates having a widening angle of less than 90°, fluffing due to widening and fiber breakage are less likely to occur in the discontinuous reinforcing fiber aggregate, and reduction of strength can be suppressed. The widening angle is more preferably more than 8° and less than 85°. Where, it is preferred that the discontinuous reinforcing fiber aggregates having the widening angle of more than 5° occupy 50% or more relative to the whole of the discontinuous reinforcing fiber aggregates (A), more preferably 80% or more, and further preferably 90% or more. By the condition where most of the discontinuous reinforcing fiber aggregates (A) are composed of discontinuous reinforcing fiber aggregates having the widening angle of more than 5°, the effect for making the reinforcing fiber composite material easily two-dimensionally isotropic can be exhibited, as aforementioned.

As a result of measuring the width and thickness of the discontinuous reinforcing fiber aggregate described above, it has been found that a case can exist wherein one discontinuous reinforcing fiber aggregate satisfies, for example, an aspect ratio of more than 30 and at the same time, the width of the most widened section/the width of the end of 1.3 or more.

Here, although the reinforcing fibers used for obtaining the reinforcing fiber composite material in the present invention is not particularly limited, it is possible to use reinforcing fibers having high strength and high elastic modulus, and these may be used solely or in combination of two or more kinds. For example, in case where the reinforcing fibers are carbon fibers, polyacrylonitrile (PAN) based, pitch based, rayon based carbon fibers, etc. can be exemplified. From the viewpoint of the balance between the strength and the elastic modulus of the obtained molded article, PAN-based carbon fibers are preferred. The density of the carbon fibers is preferably 1.65 to 1.95 g/cm$^3$, more preferably 1.7 to 1.85 g/cm$^3$. If the density is too large, the obtained carbon fiber composite material is poor in light weight performance, and if it is too small, the obtained carbon fiber composite material may become low in mechanical properties.

Further, the reinforcing fibers used for obtaining the reinforcing fiber composite material of the present invention is preferably in a form of a reinforcing fiber strand converging single fibers, from the viewpoint of productivity, and a reinforcing fiber strand having a large number of single fibers is preferred. The number of single fibers when formed as a reinforcing fiber strand can be employed within a range of 1,000 to 100,000, and in particular, preferably within a range of 10,000 to 70,000. The reinforcing fibers may be used, as needed, after cutting split reinforcing fiber strands prepared by dividing the reinforcing fiber strand into a desired number of strands using a slitter for fiber splitting or the like at a predetermined length. By splitting the strands into a desired number of strands, because the uniformity when made into a reinforcing fiber composite material is improved as compared with untreated strands, and the mechanical properties thereof beome excellent, it can be exemplified as a preferable example.

With respect to the flexural stiffness of the single fiber of the reinforcing fiber, for example, in case where the reinforcing fiber is a carbon fiber, it is preferably in a range of $1 \times 10^{-11}$ to $3.5 \times 10^{-11}$ Pa·m$^4$, more preferably $2 \times 10^{-11}$ to $3 \times 10^{-11}$ Pa·m$^4$. By the condition where the flexural stiffness of the single fiber is within the above-described range, it is possible to stabilize the quality of a reinforcing fiber nonwoven fabric sheet obtained in a process of producing a reinforcing fiber nonwoven fabric sheet described later.

Further, the reinforcing fiber strand used for obtaining the reinforcing fiber composite material is preferably being surface treated for the purpose of improving the adhesive property with the matrix resin or the like. As the methods for the surface treatment, there are electrolytic treatment, ozone treatment, ultraviolet treatment and the like. Further, a sizing agent may be applied for the purpose of preventing fluffing of the reinforcing fiber strands, improving convergence of the reinforcing fiber strands, improving adhesive property with the matrix resin, and the like. As the sizing agent, although not particularly restricted, a compound having a functional group such as an epoxy group, a urethane group, an amino group, a carboxyl group or the like can be used, and these may be employed solely or in combination of two or more kinds.

Here, the sizing treatment means a treatment process of drying a water-wetted reinforcing fiber strand wetted by water at a surface treatment process, a water washing process or the like at a moisture content of approximately 20 to 80 wt%, and thereafter, adhering a sizing agent-containing liquid (sizing solution) thereto.

Although means for applying the sizing agent is not particularly limited, for example, there are a method of immersing in a sizing solution via a roller, a method of contacting with a roller attached with a sizing solution, a method of spraying a sizing solution in a mist form, etc. Further, any of a batch type and a continuous type may be used, but a continuous type that achieves good productivity and small variation is preferred. In this case, it is preferred to control the concentration and the temperature of the sizing solution, the tension of yarn tension and the like so that the effective component of the sizing agent adheres to the reinforcing fiber strand at a uniform adhesion amount within a proper range. Further, it is more preferable to vibrate the reinforcing fiber strand with ultrasonic waves at the time of applying the sizing agent.

Although the drying temperature and drying time can be adjusted by the amount of adhesion of the compound, from the viewpoints of shortening the time required for complete removal and drying of the solvent used for applying the sizing agent, while preventing the thermal degradation of the sizing agent and preventing the fiber strand from being hardened and deteriorating spreadability of the bundle, the drying temperature is preferably 150°C or higher and 350°C or lower, and more preferably 180°C or higher and 250°C or lower.

The amount of adhesion of the sizing agent is preferably 0.01% by mass or more and 10% by mass or less, more preferably 0.05% by mass or more and 5% by mass or less, further preferably 0.1% by mass or more and 5% by mass or less, relatively to the mass of the reinforcing fiber strands only. If the amount is 0.01% by mass or less, the adhesiveness improving effect is hardly exhibited. If it is 10% by mass or more, the properties of a molded article may be deteriorated.

In the present invention, as a matrix resin used for the reinforcing fiber composite material, a thermoplastic resin or/and a thermosetting resin is used. The thermoplastic resin is not particularly restricted, and can be appropriately selected within a range that does not greatly reduce the mechanical properties as a molded article. For example, polyolefin-based resins such as polyethylene resin and polypropylene resin, polyamide-based resins such as nylon 6 resin and nylon 6,6 resin, polyester-based resins such as polyethylene terephthalate resin and polybutylene terephthalate resin, polyphenylene sulfide resin, polyether ketone resin, polyether sulfone resin, aromatic polyamide resin, or the like, can be used. Among these, it is preferably any one of a polyamide resin, a polypropylene resin and a polyphenylene sulfide resin.

The thermosetting resin is also not particularly restricted and can be appropriately selected within a range that does not greatly reduce the mechanical properties as a molded article. For example, epoxy resin, unsaturated polyester resin, vinyl ester resin, phenol resin, epoxy acrylate resin, urethane acrylate resin, phenoxy resin, alkyd resin, urethane resin, maleimide resin, cyanate resin and the like can be used. Among these, it is preferably any one of epoxy resin, unsaturated polyester resin, vinyl ester resin and phenol resin, or a mixture thereof. When a mixture of thermosetting resins is used, it is preferable that the thermosetting resins to be mixed have mutual solubility or high affinity.

The viscosity of the thermosetting resin used in the present invention is not particularly limited, but the resin viscosity at room temperature (25°C) is preferably 100 to 100,000 mPa·s.

For the matrix resin used in the present invention, various additives can be added to the thermoplastic resin or/and the thermosetting resin depending upon the application as long as the object of the present invention can be achieved. For example, a filler such as mica, talc, kaolin, hydrotalcite, sericite, bentonite, zonotlite, sepiolite, smectite, montmorillonite, wollastonite, silica, calcium carbonate, glass beads, glass flake, glass microballoon, clay, molybdenum disulfide, titanium oxide, zinc oxide, antimony oxide, calcium polyphosphate, graphite, barium sulfate, magnesium sulfate, zinc borate, calcium borate, aluminum borate whisker, potassium titanate whisker and polymer compounds, a conductivity imparting material such as a metal-based one, metal oxide-based one, carbon black and graphite powder, a halogen-based flame retardant such as brominated resin, antimony-based flame retardant such as antimony trioxide and antimony pentaoxide, a phosphorus-based flame retardant such as ammonium polyphosphate, aromatic phosphate and red phosphorus, an organic acid metal salt flame retardant such as boric acid metal salt, carboxylic acid metal salt and aromatic sulfonimide metal salt, an inorganic flame retardant such as zinc borate, zinc, zinc oxide and zirconium compound, a nitrogen-based flame retardant such as cyanuric acid, isocyanuric acid, melamine, melamine cyanurate, melamine phosphate and nitrogenated guanidine, a fluorine-based flame retardant such as PTFE (polytetrafluoroethylene), a silicone-based flame retardant such as polyorganosiloxane, a metal hydroxide-based flame retardant such as aluminum hydroxide or magnesium hydroxide, or other flame retardants, a flame retardant aid such as cadmium oxide, zinc oxide, cuprous oxide, cupric oxide, ferrous oxide, ferric oxide, cobalt oxide , manganese oxide, molybdenum oxide, tin oxide and titanium oxide, pigments, dyes, lubricants, mold release agents, compatibilizers, dispersants, a crystal nucleating agent such as mica, talc and kaolin, a plasticizer such as phosphate ester, thermal stabilizers, antioxidants, anti-coloring agents, UV absorbers, flowability modifiers, foaming agents, antibacterial agents, damping agents, deodorants, sliding property modifiers, antistatic agents such as polyether ester amide, and the like, may be added.

Further, in case where a thermosetting resin is used as the matrix resin, the aforementioned thermoplastic resin and other additives such as low-shrinking agent can be contained as long as the object of the present invention can be achieved.

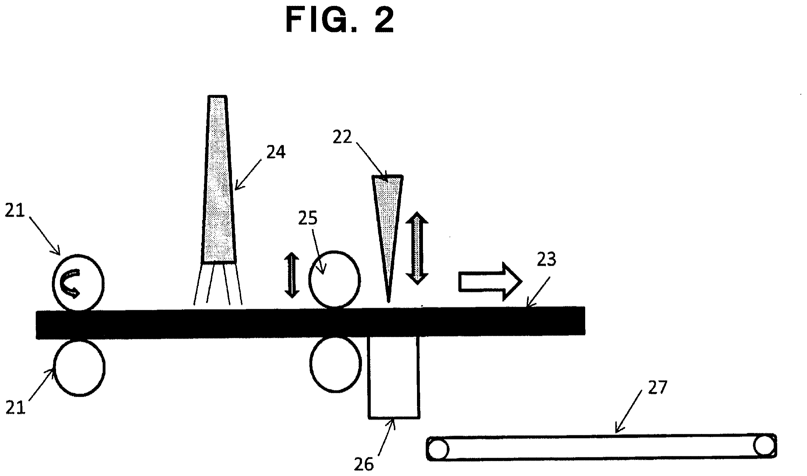

The process of obtaining the discontinuous reinforcing fiber sheet is not particularly limited as long as the object of the present invention can be achieved. For example, as shown in Fig. 2, it can be shown as an example which has conveying rolls 21, 21 for conveying a reinforcing fiber strand 23, an air head 24 for partially widening and/or splitting fibers of portions excluding the both ends, a cutter 22 and a cutter base 26 for cutting the reinforcing fiber strand 23 at a predetermined size, and a conveyor 27 for accumulating the discontinuous reinforcing fibers in a sheet form.

Here, the conveying rolls 21 are not particularly restricted as long as the object of the present invention can be achieved, and a mechanism for nipping and conveying between the rolls is exemplified. In this case, it is exemplified as a preferable example that one roll is made as a metal roll and the other roll is made as a rubber roll.

The air head 24 is not particularly restricted as long as the object of the present invention can be achieved, and it is preferably a mechanism for intermittently blowing air to portions excluding both ends before cutting the fed reinforcing fiber strand 23. The intermittently blown air is not particularly restricted as long as it does not obstruct the subject matter of the present invention, and it is exemplified in a range of 0.01 MPa to 1 MPa. If the pressure of the air is too weak, the discontinuous reinforcing fiber aggregate is not sufficiently widened and/or split, and if the air pressure is too strong, the entanglement between the reinforcing fibers tends to be lost, and the form of the discontinuous reinforcing fiber aggregate (A) cannot be obtained. Further, at the time of widening, a method is also exemplified as a preferred example wherein the feeding side of the strand is fixed by the nip rolls 25, and the strand is fed beforehand by a distance equal to or more than the distance between the nip rolls 25 and the conveying rolls 21 by the conveying rolls 21, and at a condition where the strand is loosened, the portions excluding both ends are partially widened and/or split by the air head 24.

Other than these, exemplified is a method of physically widening and/or splitting a portion excluding both ends by a fiber splitting slitter or the like before cutting the fed reinforcing fiber strand at a predetermined size, and the like.

The angle at which the reinforcing fiber strand is conveyed to the cutter 22 described later is not particularly restricted as long as it does not obstruct the subject matter of the present invention, and the direction in which the reinforcing fiber strand is conveyed is referred to as 0° direction, and the direction of the cutting blade may be set with an angle other than 90°. In the case of providing an angle other than 90°, an angle of 2° to 30° is exemplified as a preferred example. By cutting with an angle other than 90°, the reinforcing fiber surface area of the end face at the end of the strand increases, the stress concentrating at the end of the discontinuous reinforcing fibers is relaxed, and the strength of the reinforcing fiber composite material is exhibited, and therefore, it can be exemplified as a more preferable example.

The cutter 22 is not particularly restricted as long as it does not obstruct the subject matter of the present invention, and a guillotine blade type and a rotary cutter type are exemplified. As aforementioned, the direction of the blade for cutting is not particularly restricted relatively to the direction in which the reinforcing fiber strand is conveyed, and an angle may be provided similarly in the mechanism for conveying the reinforcing fiber strand, and in case of the rotary cutter type, the blades may be arranged in a spiral form.

Further, in order to achieve both the strength and the flowability at a good balance, it is preferred that the number average fiber length of discontinuous reinforcing fibers is 5 mm or more and less than 100 mm. If the number average fiber length is less than 5 mm, the entanglement between the fibers tends to be loosened when widening the discontinuous reinforcing fibers, the reinforcing fibers are sufficiently split, thereby leading to an increase in the number of contact points between the fibers, and leading to deterioration in flowability. If the number average fiber length exceeds 100 mm, the number of contact points between the fibers of the reinforcing fibers increases, thereby leading to deterioration in flowability.

The conveyor 27 for accumulating discontinuous reinforcing fibers in a sheet form is not particularly restricted as long as it does not obstruct the subject matter of the present invention, and a method of dropping on a metal wire which freely runs on the XY plane can be exemplified. Here, a method may be employed wherein a suction box is installed under the metal wire, the air used when the ends of the strand are widened and split or the air used when the cut discontinuous reinforcing fibers are sprayed is sucked, and the bulk of the sheet is lowered. Moreover, a method can be also exemplified as an example, wherein, instead of the metal wire freely running on the XY plane, a composite mechanism in which the cutter 22 and the air head 24 are integrated is reciprocated in the X direction so that the metal wire travels in the Y direction.

When obtaining a discontinuous reinforcing fiber sheet, although the discontinuous reinforcing fiber sheet may be formed from only discontinuous reinforcing fibers, it may also contain a binder comprising a thermoplastic resin or/and a thermosetting resin for shape retention. The thermoplastic resin or/and the thermosetting resin used for the binder is preferably a same resin as the matrix resin used for reinforcing fiber composite material, a resin compatible with the matrix resin, or a resin with a high adhesiveness with the matrix resin.

In the present invention, when a matrix resin is impregnated into a discontinuous reinforcing fiber sheet, a method may be employed wherein a discontinuous reinforcing fiber sheet which contains a binder is prepared and the binder resin contained in the discontinuous reinforcing fibers sheet is used as a matrix resin as it is, and a method may be employed wherein a discontinuous reinforcing fiber sheet which does not contain a binder is prepared and a matrix resin is impregnated at an arbitrary stage of producing a reinforcing fiber composite material. Further, even in case where a discontinuous reinforcing fibers sheet containing a binder is used, it is also possible to impregnate the matrix resin at an arbitrary stage of producing a reinforcing fiber composite material.

When a reinforcing fiber composite material is produced, the impregnating process of impregnating a matrix resin into the above-described discontinuous reinforcing fiber sheet to make a reinforcing fiber composite material is not particularly limited as long as the object of the present invention can be achieved, and common ones can be used.

In case where a thermoplastic resin is used as the matrix resin, it can be carried out using a press machine having a heating function. The press machine is not particularly restricted as long as it can realize the temperature and pressure necessary for impregnation of the matrix resin, and a usual press machine having a planar platen that goes up and down, or a so-called double belt press machine having a mechanism in that a pair of endless steel belts travel, can be used. In such an impregnation step, a method for forming the matrix resin in a sheet-like form of a film, a nonwoven fabric, a woven fabric or the like, thereafter, laminating it with a discontinuous reinforcing fiber sheet, and at that state, melting/impregnating the matrix resin integrally using the above-described press machine or the like, or a method for laminating sheet-like materials each of which is prepared by integrating a discontinuous reinforcing fiber sheet and a matrix resin beforehand, and thereafter, melting/impregnating the matrix resin, or also a method for laminating a matrix resin, which is formed in a sheet-like material such as a film, a nonwoven fabric, a woven fabric or the like, onto a sheet-like material which is prepared by integrating a discontinuous reinforcing fiber sheet and the matrix resin beforehand, and thereafter, melting/impregnating the matrix resin, can be employed.

In case where a thermosetting resin is used as the matrix resin, there is no particular restriction as long as it can realize the temperature and the pressure necessary for impregnating the matrix resin, and a usual press machine having a planar platen that goes up and down, a so-called double belt press machine having a mechanism in that a pair of endless steel belts travel, or press rollers for nipping between upper and lower rollers, can be used. In such an impregnation step, a method can be exemplified wherein after a matrix resin is formed into a sheet on a release film, a discontinuous reinforcing fiber sheet is sandwiched between the matrix resin sheets, and it is pressurized and impregnated. At that time, in order to perform the impregnation more reliably, a method of reducing in pressure down to a vacuum condition, evacuating air inside the seat, and then pressurizing can be exemplified as one of preferred examples.

Further, in the present invention, as long as the subject matter of the present invention is not obstructed, a reinforcing fiber composite material may be prepared by forming a sandwich structure using a discontinuous reinforcing fiber sheet and a continuous reinforcing fiber sheet or another discontinuous reinforcing fiber sheet. For the sandwich structure, the discontinuous reinforcing fiber sheet may be used for either the surface layer or the core layer, and by using the continuous reinforcing fiber sheet for the surface layer and the discontinuous reinforcing fiber sheet for the core layer, because the mechanical properties and the surface quality when reinforcing fiber composite material is formed are excellent, it can be exemplified as a preferable example. Here, although the reinforcing fiber used for the continuous reinforcing fiber sheet and the discontinuous reinforcing fiber sheet is not particularly limited, for example, a carbon fiber, a glass fiber, an aramid fiber, an alumina fiber, a silicon carbide fiber, a boron fiber, a metal fiber, a natural fiber, a mineral fiber and the like can be used, and these may be used solely or in combination of two or more kinds. As the reinforcing fiber form of the continuous reinforcing fiber sheet, a general form can be used as long as the subject matter of the present invention is not obstructed. For example, a unidirectional reinforcing fiber sheet in which reinforcing fibers are aligned in one direction, a reinforcing fiber laminated sheet in which unidirectional reinforcing fiber sheets are laminated in multiple directions, a textile reinforcing fiber sheet in which reinforcing fibers are woven, and the like, can be exemplified. As the reinforcing fiber form of the discontinuous reinforcing fiber sheet, a general form can be used as long as the subject matter of the present invention is not obstructed. For example, a chopped strand sheet prepared by cutting a strand at a predetermined length and spraying the cut pieces, a dry discontinuous reinforcing fiber sheet produced by using a carding machine or an air laid device, a wet discontinuous reinforcing fiber sheet produced by using a paper machine, and the like, can be exemplified.

In the present invention, the obtained reinforcing fiber composite material can be used as SMC (Sheet Molding Compound) when a thermosetting resin is used as the matrix resin, or as a stampable sheet when a thermoplastic resin is used as the matrix resin.

The SMC molded article is obtained by heating and pressurizing a sheet-form base material (SMC) prepared semi-cured by impregnating a matrix resin, which is a thermosetting resin, into a discontinuous reinforcing fibers sheet and semi-curing the matrix resin. The stampable sheet molded article is obtained by once heating a sheet-like base material (stampable sheet) prepared by impregnating a thermoplastic resin into a discontinuous reinforcing fiber sheet by an infrared heater or the like to a temperature of the melting point of the thermoplastic resin or higher, and cooling and pressing it in a mold controlled at a predetermined temperature.

The obtained molded article is suitable for use in automobile parts, aircraft parts, household electric appliances, office electric appliances, casings of personal computers and the like.

Examples

Next, Examples and Comparative Examples of the present invention will be explained.

First, properties and measurement methods used in Examples and Comparative Examples will be explained.

(1) Measurement of width of discontinuous reinforcing fiber aggregate:

A sample of 100 mm x 100 mm was cut out from a reinforcing fiber composite material and the cut sample was heated in an electric furnace heated to 550 °C for approximately 1 to 2 hours to burn out organic substances such as matrix resin. A discontinuous reinforcing fiber sheet was taken out from the burned-out sample, discontinuous reinforcing fibers were carefully taken out from the discontinuous reinforcing fiber sheet using tweezers and the like so that all their forms as aggregate units were not collapsed, and the discontinuous reinforcing fibers aggregates were all extracted from the discontinuous reinforcing fiber sheet by the tweezers. All the extracted discontinuous reinforcing fiber aggregates were placed on a flat table, and the widths of both ends of each discontinuous reinforcing fiber aggregate and the width of the most widened section, in which the width of each discontinuous reinforcing fiber aggregate was most widened in a direction perpendicular to the fiber alignment direction when the discontinuous reinforcing fiber aggregate was projected on a two-dimensional plane, were measured using a caliper capable of measuring up to 0.1 mm unit. At that time, in order to more accurately measure the widths, the aggregate of discontinuous reinforcing fibers is placed on a flat table and the widths of the fiber aggregate when projected on a two-dimensional plane may be measured using a digital microscope (supplied by Keyence Corporation). The obtained widths of both ends and the most widened section were recorded on a recording paper. With respect to discontinuous reinforcing fibers with bundle widths at both ends that were both less than 0.1 mm, they were collectively picked up as discontinuous reinforcing fibers (B) opened to the single fiber level.

At that time, with respect to the judgement of the width and the thickness, a long side in the section across the fiber direction at the end of the discontinuous reinforcing fiber aggregate was determined to be the width, and a short side thereof was determined to be the thickness. In case where the end of the discontinuous reinforcing fiber aggregate was cut with an angle $\theta$, as shown in Fig. 3, it was determined to be a width in a direction perpendicular to the longitudinal direction when the discontinuous reinforcing fiber aggregate was projected on a two-dimensional plane. In the illustrated example, symbol 2 indicates the most widened section of a discontinuous reinforcing fiber aggregate (A) 31, and $M_1$ and $M_2$ indicate the widths of the respective ends thereof.

In case where the discontinuous reinforcing fiber sheet cannot be taken out successfully from the reinforcing fiber composite material, it may be measured similarly from a discontinuous reinforcing fiber sheet which is not impregnated with a matrix resin.

(2) Measurement of thickness of discontinuous reinforcing fiber aggregate:

The thickness of discontinuous reinforcing fiber aggregate was measured at each end thereof by using a micrometer with respect to all the discontinuous reinforcing fiber aggregates in which the widths of both ends and the most widened section were measured. At that time, the discontinuous reinforcing fibers were carefully handled so as not to collapse the aggregate form, the position thereof was adjusted by tweezers so that the middle point between the terminal points of the end became a center of the indenter of the micrometer as shown in Fig. 4, and the thickness of the end of the discontinuous reinforcing fiber aggregate was measured (41: thickness measurement point at the end). Next, for the most widened section 2 of the discontinuous reinforcing fiber aggregate, the position was similarly adjusted so that the middle point between both terminal points of the most widened section became a center of the indenter of the micrometer, and the thickness of the most widened section was measured (42: thickness measurement point at the most widened section). In case where the discontinuous reinforcing fiber aggregate was measured in which the most widened section was split and widened twice the diameter of the indenter of the micrometer or more, three points of thicknesses at the both terminal points and the middle point of the most widened section were measured, and an average value thereof was used (43: thickness measurement point of the most widened section when the width of the most widened section is greater than twice the diameter of the micrometer indenter). The obtained thicknesses of both ends and the most widened section were recorded on a recording paper similarly to in the aforementioned width. With respect to a discontinuous reinforcing fiber aggregate which is difficult to measure the thickness of the most widened section, a method may be employed wherein the thickness of the end is measured, and the thickness of the most widened section is calculated from the ratio of the thickness and width of the end and the width of the most widened section, using the following equation.

$$\text{Thickness of most widened section} = \text{thickness of end} \times \text{width of end} / \text{width of most widened section}$$

(3) Determination of discontinuous reinforcing fiber aggregate (A) and measurement method of weight ratio:

From the width and thickness of the discontinuous reinforcing fiber aggregate obtained as described above, the aspect ratio of the most widened section and the aspect ratio at both ends were calculated for all discontinuous reinforcing fiber aggregates, using the following equations.

$$\text{Aspect ratio of most widened section} = \text{width of most widened section} / \text{thickness of most widened section}$$

$$\text{Aspect ratio of end} = \text{width of end} / \text{thickness of end}$$

From the calculated aspect ratios, discontinuous reinforcing fiber aggregates (A), in each of which a most widened section, where the width of the discontinuous reinforcing fiber aggregate was made greatest, was present at a position excluding both ends in the fiber alignment direction, and the aspect ratio of the most widened section became 1.3 times or more the aspect ratio of at least one of the ends, and non-discontinuous reinforcing fiber aggregates (C) other than those, were classified. After the classification, using a balance capable of measuring up to 1/10,000 g, the total weight of the discontinuous reinforcing fiber aggregates (A) and the total weight of the non-discontinuous reinforcing fiber aggregates (C) and discontinuous reinforcing fibers (B) opened to the single fiber level were measured. After the measurement, the weight ratio of the discontinuous reinforcing fiber aggregates (A) occupying relatively to the total weight of the discontinuous reinforcing fibers was calculated using the following equation.

$$\text{Ratio of discontinuous reinforcing fiber aggregates (A)} = \text{total weight of discontinuous reinforcing fiber aggregates (A)} / \text{total amount of discontinuous reinforcing fibers}$$

Here, the total amount of discontinuous reinforcing fibers means the total weight of the discontinuous reinforcing fiber aggregates (A) + the total weight of the non-discontinuous reinforcing fiber aggregates (C) + the total weight of the discontinuous reinforcing fibers (B) opened to the single fiber level.

In this connection, the total weights of discontinuous reinforcing fiber aggregates (A-2) in each of which the aspect ratio of the most widened section of the discontinuous reinforcing fiber aggregate (A) was 1.5 times or more the aspect ratio of at least one of the ends, discontinuous reinforcing fiber aggregates (A-3) in each of which it was 2 times or more, discontinuous reinforcing fiber aggregates (A-4) in each of which the aspect ratio of the most widened section of the discontinuous reinforcing fiber aggregate (A) was more than 30, discontinuous reinforcing fiber aggregates (A-5) in each of which, with respect to the width of at least one of the ends and the width of the most widened section of the discontinuous reinforcing fiber aggregate (A), the width of the most widened section/the width of the end was 1.3 or more, and discontinuous reinforcing fiber aggregates (A-6) in each of which, with respect to the thickness of at least one of the ends and the thickness of the most widened section of the discontinuous reinforcing fiber aggregate (A), the thickness of the end/the thickness of the most widened section was 1.2 or more, were determined similarly, and the weight ratio of each of (A-2) to (A-6) occupying relatively to the total amount of the discontinuous reinforcing fibers was calculated using the following equation, similarly to in the above-described (A).

$$\text{Ratio of discontinuous reinforcing fiber aggregates (A-N)} = \text{total weight of discontinuous reinforcing fiber aggregates (A-N)/total amount of discontinuous reinforcing fibers}$$

Where, N = 2 to 6.

Further, as a result of measuring the width and thickness of a certain discontinuous reinforcing fiber aggregate, there is a possibility that any or all of (A-2), (A-3), (A-4), (A-5) and (A-6) may be satisfied at the same time.

(4) Calculation of widening angle:

From the above-described widths of the ends and the widths of the most widened sections of the discontinuous reinforcing fiber aggregates (A), the widening angle for each discontinuous reinforcing fiber aggregate (A) was calculated using the following equation.

$$\text{Widening angle} = \tan^{-1}\{(\text{width of most widened section - width of end})/2/\text{distance between end and most widened section}\}$$

Here, the total weight of discontinuous reinforcing fiber aggregates (A-7) in each of which the widening angle in the discontinuous reinforcing fiber aggregate (A) satisfies at least one end to exceed 5° and less than 90° was measured, and the weight ratio thereof occupying relatively to the total amount of discontinuous reinforcing fibers was calculated using the above-described ratio calculation equation of (A-N).

(5) Vf (content of reinforcing fibers in stampable sheet: %):

A sample of approximately 2g was cut out from a reinforcing fiber composite material, and its mass was measured. Thereafter, the sample was heated in an electric furnace heated to 500 to 600°C for approximately 1 to 2 hours to burn out organic substances such as a matrix resin. After cooling down to a room temperature, the mass of the discontinuous reinforcing fibers remaining was measured. The ratio of the discontinuous reinforcing fibers to the mass of the sample before burning off the organic substances such as the matrix resin was measured, and it was determined as the content (%) of the reinforcing fibers.

(6) Flexural strength, flexural elastic modulus:

The flexural strength was measured in accordance with JIS-K7171 (2008). For the flexural strength, the CV value (coefficient of variation [%]) of the flexural strength was also calculated. The CV value of the flexural strength less than 10% was determined that the variation of the flexural strength was small and it was good (∘), and the CV value of 10% or more was determined that the variation of the flexural strength was large and it was not good (x).
The sample to be subjected to the bending test was measured in an arbitrary direction (0° direction) in the two-dimensional plane and in the direction of 90° relative to the 0° direction, and in case where the average value in the 0° direction/the average value in the 90° direction was within a range of 1.3 to 0.77, it was determined as isotropy (∘), and the rest was determined as anisotropy (x).

(7) Evaluation of flowability:

<In case where the matrix resin is a thermoplastic resin>

One sheet of a discontinuous reinforcing fibers composite material with a size of 100 mm x 100 mm x 2 mmt (t: thickness) was placed on a press board heated up to a temperature of the melting point of the thermoplastic resin + 40°C, and it was pressed for the size of 100 mm x 100 mm at 10 MPa for 300 seconds, thereafter, the press board was cooled down to a temperature of the solidification temperature of the thermoplastic resin - 50°C in the pressurized state, and then, the sample was taken out. The area A2 after this pressing and the area A1 before the pressing of the sheet were measured, and A2/A1/2 mmt was defined as flowability (%/mm).

<In case where the matrix resin is a thermosetting resin>

One sheet of a discontinuous reinforcing fibers composite material precursor having a size of 100 mm x 100 mm x 2 mmt (t: thickness), whose matrix resin was uncured, was placed on a press board heated up to a temperature at which the curing time from initiation of flow of the matrix resin until curing was in a range of 300 to 400 seconds, and it was pressed for the size of 100 mm x 100 mm at 10 MPa for 600 seconds. The area A2 of the sheet after this pressing and the area A1 of the sheet before the pressing were measured, and A2/A1/2 mmt was defined as flowability (%/mm).

(8) Measurement method of number average fiber length (unit: mm):

A sample of 100 mm x 100 mm was cut out from a discontinuous reinforcing fiber composite material, and then, the sample was heated in an electric furnace heated to 500 °C for approximately 1 to 2 hours to burn out organic substances such as matrix resin. Discontinuous reinforcing fibers were randomly extracted by 400 fibers from the discontinuous reinforcing fiber sheet left after cooling to a room temperature with tweezers, their lengths were measured up to the 0.1 mm unit with an optical microscope or scanning electron microscope, and the number average fiber length of the reinforcing fiber nonwoven fabric sheet was calculated by an equation of number average fiber length = $\Sigma Li/400$. Here, Li is the measured fiber length.

Next, the reinforcing fibers and the matrix resin used in Examples and Comparative Examples of the present invention will be explained.

Carbon fiber strand (1) (abbreviated as carbon fiber (1) in the Tables described later):
A continuous carbon fiber strand having a fiber diameter of 7 $\mu$m, a tensile elastic modulus of 230 GPa and a number of filaments of 12,000 was used.
Carbon fiber strand (2) (abbreviated as carbon fiber (2) in the Tables described later):
A continuous carbon fiber strand having a fiber diameter of 7.2 $\mu$m, a tensile elastic modulus of 242 GPa, and a number of filaments of 50,000 was used.
Matrix resin (1):
Nylon resin (supplied by Toray Industries, Inc., CM1001, trade name "Amilan" (registered trademark)) was used.
Matrix resin (2):
A resin mixed with 100 parts by mass of vinyl ester resin (VE) resin (supplied by Dow Chemical Co., Ltd., "DELAKEN" 790 (registered trademark)), 1 part by mass of tert-butyl peroxybenzoate (supplied by NOF Corporation, "PERBUTYL Z" (registered trademark)), 2 parts by mass of zinc stearate (supplied by Sakai Chemical Industry Co., Ltd., SZ-2000) and 4 parts by mass of magnesium oxide (supplied by Kyowa Chemical Industry Co., Ltd., MgO #40) was used.

Example 1:

A discontinuous carbon fiber sheet was prepared by using the apparatus as shown in Fig. 2. After intermittently blowing air to the carbon fiber strand (1) at an air pressure of 0.3 MPa for 0.2 second to partially widen and split the strand, the strand was cut with a cutter so as to include the partially widened and split portions in the discontinuous fibers and have a fiber length of 25 mm to continuously produce discontinuous carbon fiber aggregates, and they were deposited on a conveyor to obtain a discontinuous carbon fiber sheet having an areal weight of 100 g/m². The obtained discontinuous carbon fiber sheet was a discontinuous carbon fiber sheet including discontinuous carbon fiber aggregates (A). Next, a matrix resin film having an areal weight of 100 g/m² made of the matrix resin (1) was prepared using a film forming machine, the obtained discontinuous carbon fiber sheet and matrix resin film were laminated so that a carbon fiber composite material flat plate to be obtained had a thickness of 2 mm and became Vf = 40%, and the laminate was preheated in a flat plate mold of a press machine heated to 260°C for 300 seconds, pressurized for 300 seconds while being applied with a pressure of 5 MPa, and cooled down to 50°C at the pressurized condition to obtain a flat plate of a carbon fiber composite material having a thickness of 2 mm. The carbon fiber content in the obtained carbon fiber composite material was Vf = 40%. The obtained flat plate had no warpage, and when the flexural strengths in the directions of 0° and 90° were measured from the carbon fiber composite material, the average value of the flexural strengths in the directions of 0° and 90° was 430 MPa, the CV value of the flexural strengths in the respective directions was less than 10%, and with respect to the flexural strength and flexural modulus, the average value in the direction of 0°/the average value in the direction of 90° was within a range of 1.3 to 0.77 which was two-dimensionally isotropic.

Next, a sample of 100 mm x 100 mm was cut out from the obtained carbon fiber composite material flat plate, the sample cut out was heated in an electric furnace heated to 550°C for 2 hours to burn off the matrix resin, and a discontinue carbon fiber sheet was taken out. All discontinuous carbon fiber aggregates in the discontinuous carbon fiber sheet were extracted from the discontinuous carbon fiber sheet taken out, and the widths and thicknesses thereof were measured, and the weight ratios of discontinuous carbon fiber aggregates (A), (A-2) to (A-7) occupying in the total amount of the discontinuous carbon fibers were determined. At that time, the weight ratio of the discontinuous carbon fiber aggregate (A) in the discontinuous carbon fiber sheet was 35 wt%, and the determination results of (A-2) to (A-7) are shown in Table 1.

Further, a sample of 100 mm x 100 mm was cut out from the carbon fiber composite material flat plate, and when the flowability was evaluated, the flow rate was 170%/mm. Further, the obtained sample after evaluation of flowability was excellent in surface quality, and when the sample was heated in an electric furnace heated to 550°C for 2 hours, the matrix resin was burned off, and the discontinuous carbon fiber sheet was taken out, the discontinuous fiber carbon aggregates on the surface layer of the continuous carbon fiber sheet collapsed in aggregate shape by the shearing force of the matrix resin and were opened. The conditions and evaluation results are shown in Table 1.

Example 2:

A carbon fiber composite material flat plate was prepared similarly to in Example 1 other than a condition where air was intermittently blown to the strand at an air pressure of 0.2 MPa for 0.2 second to partially widen and split the strand and then a discontinuous carbon fiber sheet including partially widened and split discontinuous carbon fiber aggregates was obtained, and the evaluation thereof was carried out. The results are shown in Table 1.

Example 3:

A carbon fiber composite material flat plate was prepared similarly to in Example 1 other than a condition where air was intermittently blown to the strand at an air pressure of 0.15 MPa for 0.2 second to partially widen and split the strand and then a discontinuous carbon fiber sheet including partially widened and split discontinuous carbon fiber aggregates was obtained, and the evaluation thereof was carried out. The results are shown in Table 1.

Example 4:

A carbon fiber composite material flat plate was prepared similarly to in Example 3 other than a condition where the cut length was changed to 50 mm, and the evaluation thereof was carried out. The results are shown in Table 1.

Example 5:

Air was intermittently blown to the strand at an air pressure of 0.2 MPa for 0.2 second to partially widen and split the strand and then a discontinuous carbon fiber sheet including partially widened and split discontinuous carbon fiber aggregates was obtained. Next, the matrix resin (2) paste was coated on a polypropylene release film using a doctor blade, and a matrix resin (2) film, adjusted with the film areal weight so that the carbon fiber content in a carbon fiber composite material to be obtained relatively to the discontinuous carbon fiber sheet became Vf = 40%, was prepared. A discontinuous carbon fiber sheet laminate, which was prepared by laminating the obtained discontinuous carbon fiber sheets, was sandwiched between the matrix resin (2) films, and after the matrix resin (2) was impregnated into the discontinuous carbon fiber sheet laminate, the laminate was left at a condition of 40°C for 24 hours to thicken the matrix resin (2) sufficiently, and a sheet-like carbon fiber composite material precursor was obtained. Next, it was set in a flat plate mold of a press machine whose mold was heated to 135°C so that the charge rate (a rate of the area of the sheet-like molding material relative to the mold area when the mold is viewed from above) became 50%, and a carbon fiber composite material flat plate was prepared similarly to in Example 1 other than a condition where it was pressurized for 600 seconds while being applied with a pressure of 5 MPa to obtain the flat plate having a thickness of 2 mm and a Vf of 40%, and the evaluation thereof was carried out. The results are shown in Table 1.

Example 6:

Using the carbon fiber strand (2), a carbon fiber composite material flat plate was prepared similarly to in Example 1 other than a condition where air was intermittently blown to the strand at an air pressure of 0.2 MPa for 0.2 second to partially widen and split the strand and then a discontinuous carbon fiber sheet including partially widened and split discontinuous carbon fiber aggregates was obtained, and the evaluation thereof was carried out. The results are shown in Table 1.

Comparative Example 1:

The carbon fiber strand (1) was cut as it was at a fiber length of 25 mm and a chopped strand discontinuous carbon fiber sheet, whose the forms of the discontinuous carbon fiber aggregates have an approximately uniform width and thickness with respect to the longitudinal direction (fiber length direction), was obtained. A carbon fiber composite material flat plate was prepared similarly to in Example 1 other than a condition where a resin film having an areal weight of 100 $g/m^2$ made of the matrix resin (1) was laminated on the obtained discontinuous carbon fiber sheet so that the carbon fiber content in the carbon fiber composite material to be obtained became Vf = 40%, and the laminate was preheated in a flat plate mold of a press machine heated to 260°C for 300 seconds, pressurized for 300 seconds while being applied with a pressure of 5 MPa, and cooled down to 50°C at the pressurized condition to obtain a flat plate of a carbon fiber composite material having a thickness of 2 mm, and the evaluation thereof was carried out. The results are shown in Table 2. The obtained carbon fiber composite material was inferior in flexural strength and flexural elastic modulus, variation in CV value was large, and it was not two-dimensionally isotropic. Further, the sample after the flowability evaluation was inferior in surface quality, and when the sample was heated in an electric furnace heated to 550°C for 2 hours, the matrix resin was burned off, and the chopped strand discontinuous carbon fiber sheet was taken out, the chopped strand on the surface layer of the chopped strand discontinuous carbon fiber sheet was maintained as a chopped strand shape, and the surface of the chopped strand was fluffy more or less. The conditions and evaluation results are shown in Table 2.

Comparative Example 2:

The carbon fiber strand (1) was oscillated and widened by a vibration rod oscillating at 10 Hz to obtain a widened carbon fiber strand (1) having a carbon fiber strand width of 15 mm. With respect to the obtained widened carbon fiber bundle (1), a carbon fiber composite material flat plate was prepared similarly to in Example 1 other than a condition where it was slit at 0.5 mm intervals using a disk-shaped dividing blade, the slit carbon fiber strands (1) were cut at a fiber length of 25 mm, and a discontinuous carbon fiber sheet was obtained, and the evaluation thereof was carried out. The results are shown in Table 2. In the obtained discontinuous carbon fiber sheet, most of the discontinuous carbon fibers constituting the sheet were formed from divided chopped strands each divided in the width direction having approximately uniform width with respect to the longitudinal direction (fiber length direction), and chopped strands in each of which at least one end was divided and widened, but did not satisfy an aggregate shape, and the obtained carbon fiber composite material was inferior in flowability.

Comparative Example 3:

A carbon fiber composite material flat plate was prepared similarly to in Example 1 other than a condition where the carbon fiber strand (1) was oscillated and widened by a vibration rod oscillating at 10 Hz, the widened carbon fiber strand (1) having a carbon fiber strand width of 11 mm was cut at a fiber length of 25 mm, and a discontinuous carbon fiber sheet was obtained, and the evaluation thereof was carried out. The results are shown in Table 2. The obtained carbon fiber composite material was inferior in flowability.

[Table 1]

| Example | 1 | 2 | 3 | 4 | 5 | 6 |
|---|---|---|---|---|---|---|
| Carbon fiber | Carbon fiber (1) | Carbon fiber (1) | Carbon fiber (1) | Carbon fiber (1) | Carbon fiber (1) | Carbon fiber (2) |
| Cut length (mm) | 25 | 25 | 25 | 50 | 25 | 25 |
| Matrix resin | Matrix resin (1) | Matrix resin (1) | Matrix resin (1) | Matrix resin (1) | Matrix resin (2) | Matrix resin (1) |

(continued)

| Example | | 1 | 2 | 3 | 4 | 5 | 6 |
|---|---|---|---|---|---|---|---|
| Vf (%) | | 40 | 40 | 40 | 40 | 40 | 40 |
| Weight ratio of discontinuous carbon fiber aggregate (%) | (A) | 35 | 46 | 58 | 73 | 35 | 42 |
| | (A-2) | 33 | 45 | 54 | 72 | 33 | 40 |
| | (A-3) | 32 | 45 | 54 | 72 | 32 | 40 |
| | (A-4) | 33 | 45 | 53 | 71 | 34 | 41 |
| | (A-5) | 35 | 46 | 58 | 72 | 33 | 40 |
| | (A-6) | 35 | 46 | 58 | 72 | 33 | 40 |
| | (A-7) | 35 | 46 | 58 | 73 | 35 | 2 |
| Flexural strength (MPa) | | 430 | 410 | 400 | 420 | 430 | 400 |
| Flexural elastic modulus (GPa) | | 26 | 27 | 26 | 26 | 27 | 26 |
| CV value (%) | | ○ | ○ | ○ | ○ | ○ | ○ |
| Isotropy | | ○ | ○ | ○ | ○ | ○ | ○ |
| Flowability (%/mm) | | 170 | 183 | 200 | 160 | 170 | 165 |
| Opening of fibers due to evaluation of flowability | | ○ | ○ | ○ | ○ | ○ | ○ |

[Table 2]

| Comparative Example | | 1 | 2 | 3 |
|---|---|---|---|---|
| Carbon fiber | | Carbon fiber (1) | Carbon fiber (1) | Carbon fiber (1) |
| Cut length (mm) | | 25 | 25 | 25 |
| Matrix resin | | Matrix resin (1) | Matrix resin (1) | Matrix resin (1) |
| Vf(%) | | 40 | 40 | 40 |
| Weight ratio of discontinuous carbon fiber aggregate (%) | (A) | 0 | 3 | 2 |
| | (A-2) | 0 | 2 | 1 |
| | (A-3) | 0 | 2 | 1 |
| | (A-4) | 0 | 2 | 1 |
| | (A-5) | 0 | 3 | 2 |
| | (A-6) | 0 | 3 | 2 |
| | (A-7) | 0 | 0 | 0 |
| Flexural strength (MPa) | | 280 | 530 | 510 |
| Flexural elastic modulus (GPa) | | 20 | 28 | 28 |
| CV value (%) | | × | ○ | ○ |
| Isotropy | | × | ○ | × |
| Flowability (%/mm) | | 153 | 110 | 136 |
| Opening of fibers due to evaluation of flowability | | × | × | × |

Where, as a result of measuring the width and thickness of a certain discontinuous reinforcing fiber aggregate, since there is a possibility that any one or all of (A-2) or (A-3), (A-4), (A-5), (A-6) are satisfied simultaneously, the sum of discontinuous reinforcing fiber aggregates (A-2) to (A-7) in Table 1 and Table 2 does not match the weight ratio of discontinuous reinforcing fiber aggregate (A).

Industrial Applicability

The reinforcing fiber composite material according to the present invention can be applied to the production of any fiber-reinforced molded article requiring high flowability and two-dimensional isotropy, less variation of mechanical properties, which could not be achieved by the prior art.

Explanation of symbols

1: discontinuous reinforcing fiber aggregate (A)
2: most widened section of discontinuous reinforcing fiber aggregate (A)
3, 4: one end of discontinuous reinforcing fiber aggregate (A)
5: projection of discontinuous reinforcing fiber aggregate (A) from the direction of Fig. 1(B)
6: fiber alignment direction of discontinuous reinforcing fiber aggregate (A)
7: middle point of the end of discontinuous reinforcing fiber aggregate (A)
8: projection of discontinuous reinforcing fiber aggregate (A) from the direction of Fig. 1(C)
21: conveying roll
22: cutter
23: reinforcing fiber strand
24: air head
25: nip roll
26: cutter base
27: conveyor
31: discontinuous reinforcing fiber aggregate (A) in case where strand is cut with an angle
41: thickness measurement point of end
42: thickness measurement point of most widened section
43: thickness measurement point of most widened section in case where width of the most widened section is greater than twice the diameter of micrometer indenter

**Claims**

1.   A reinforcing fiber composite material comprising at least a matrix resin and discontinuous reinforcing fibers which include discontinuous reinforcing fiber aggregates, wherein

said discontinuous reinforcing fibers include at least 5 wt% of discontinuous reinforcing fiber aggregates (A) (1, 31) in each of which a most widened section (2), where the width of the discontinuous reinforcing fiber aggregate (1, 31) in a direction intersecting an alignment direction (6) of said discontinuous reinforcing fibers is made greatest when the discontinuous reinforcing fiber aggregate (1, 31) is two-dimensionally projected, is present at a position excluding both ends (3, 4) of the discontinuous reinforcing fiber aggregate (1, 31), wherein the aspect ratio, that is the width of the discontinuous reinforcing fiber aggregate (1, 31)/thickness of the discontinuous reinforcing fiber aggregate (1, 31), of the most widened section (2) is 1.3 times or more the aspect ratio of at least one of the ends (3, 4) of the discontinuous reinforcing fiber aggregate (1, 31), **characterized in that** discontinuous reinforcing fiber aggregates, in each of which, with respect to a thickness of at least one of the ends (3, 4) and a thickness of the most widened section (2) of said discontinuous reinforcing fiber aggregate (A) (1, 31), the thickness of the end (3, 4)/the thickness of the most widened section (2) is 1.2 or more and less than 100, are included and wherein
the discontinuous reinforcing fiber aggregates having the thickness of the end (3, 4)/the thickness of the most widened section (2) of 1.2 or more occupy 50% or more relative to the whole of the discontinuous reinforcing fiber aggregates (A) (1, 31).

2.   The reinforcing fiber composite material according to claim 1, wherein said discontinuous reinforcing fiber aggregates (A) (1, 31) include a discontinuous reinforcing fiber aggregate having an aspect ratio of more than 30 in the most widened section.

3. The reinforcing fiber composite material according to claim 1 or 2, wherein discontinuous reinforcing fiber aggregates, in each of which, with respect to a width of at least one of the ends (3, 4) and a width of the most widened section (2) of said discontinuous reinforcing fiber aggregate (A) (1, 31) when said discontinuous reinforcing fiber aggregate (A) (1, 31) is two-dimensionally projected, the width of the most widened section (2)/the width of the end (3, 4) is 1.3 or more, are included.

4. The reinforcing fiber composite material according to any one of claims 1 to 3, wherein discontinuous reinforcing fiber aggregates, in each of which a widening angle calculated from a width of at least one of the ends (3, 4) and a width of the most widened section (2) of said discontinuous reinforcing fiber aggregate (A) (1, 31) is more than 5°, are included, wherein

$$\text{widening angle} = \tan^{-1}\{(\text{width of most widened section (2)} - \text{width of the end (3, 4)})/2/\text{distance between the end and the most widened section (2)}\}$$

5. The reinforcing fiber composite material according to any one of claims 1 to 4, wherein a number average fiber length of said discontinuous reinforcing fibers is 5 mm or more and less than 100 mm.

6. The reinforcing fiber composite material according to any one of claims 1 to 5, wherein both ends (3, 4) of said discontinuous reinforcing fiber aggregate (A) (31) are cut with an angle of 2° to 30° relatively to the alignment direction (6) of discontinuous reinforcing fibers in the discontinuous reinforcing fiber aggregate (A) (31).

7. The reinforcing fiber composite material according to any one of claims 1 to 6, wherein said discontinuous reinforcing fibers contain carbon fibers.

**Patentansprüche**

1. Verstärkungsfaser-Verbundmaterial, das mindestens ein Matrixharz und diskontinuierliche Verstärkungsfasern, die Aggregate diskontinuierlicher Verstärkungsfasern enthalten, aufweist, wobei die diskontinuierlichen Verstärkungsfasern mindestens 5 Gew.-% Aggregate diskontinuierlicher Verstärkungsfasern (A) (1, 31) enthalten, in denen jeweils ein am meisten aufgeweiteter Abschnitt (2), wo die Breite des Aggregats diskontinuierlicher Verstärkungsfasern (1, 31) in einer Richtung, die eine Ausrichtungsrichtung (6) der diskontinuierlichen Verstärkungsfasern schneidet, am größten gemacht ist, wenn das Aggregat diskontinuierlicher Verstärkungsfasern (1, 31) zweidimensional projiziert ist, an einer Position vorhanden ist, die beide Enden (3, 4) des Aggregats diskontinuierlicher Verstärkungsfasern (1, 31) ausschließt, wobei das Seitenverhältnis, das heißt die Breite des Aggregats diskontinuierlicher Verstärkungsfasern (1, 31)/Dicke des Aggregats diskontinuierlicher Verstärkungsfasern (1, 31) des am meisten aufgeweiteten Abschnitts (2), das 1,3-fache oder mehr des Seitenverhältnisses von mindestens einem der Enden (3, 4) des Aggregats diskontinuierlicher Verstärkungsfasern (1, 31) beträgt, **dadurch gekennzeichnet, dass**

   Aggregate diskontinuierlicher Verstärkungsfasern, in denen jeweils, in Bezug auf eine Dicke von mindestens einem der Enden (3, 4) und eine Dicke des am meisten aufgeweiteten Abschnitts (2) des Aggregats diskontinuierlicher Verstärkungsfasern (A) (1, 31), die Dicke des Endes (3, 4)/die Dicke des am meisten aufgeweiteten Abschnitts (2) 1,2 oder mehr und weniger als 100 beträgt, enthalten sind, und wobei
   die Aggregate diskontinuierlicher Verstärkungsfasern mit der Dicke des Endes (3, 4)/der Dicke des am meisten aufgeweiteten Abschnitts (2) von 1,2 oder mehr 50 % oder mehr in Bezug auf die gesamten Aggregate diskontinuierlicher Verstärkungsfasern (A) (1, 31) einnehmen.

2. Verstärkungsfaser-Verbundmaterial nach Anspruch 1, wobei die Aggregate diskontinuierlicher Verstärkungsfasern (A) (1, 31) ein Aggregat diskontinuierlicher Verstärkungsfasern mit einem Seitenverhältnis von mehr als 30 in dem am meisten aufgeweiteten Abschnitt umfassen.

3. Verstärkungsfaser-Verbundmaterial nach Anspruch 1 oder 2, wobei Aggregate diskontinuierlicher Verstärkungsfasern enthalten sind, in denen jeweils, in Bezug auf eine Breite von mindestens einem der Enden (3, 4) und eine Dicke des am meisten aufgeweiteten Abschnitts (2) der Aggregate diskontinuierlicher Verstärkungsfasern (A) (1, 31), wenn das Aggregat diskontinuierlicher Verstärkungsfasern (A) (1, 31) zweidimensional projiziert ist, die Breite des am meisten aufgeweiteten Abschnitts (2)/die Breite des Endes (3, 4) 1,3 oder mehr beträgt.

4. Verstärkungsfaser-Verbundmaterial nach einem der Ansprüche 1 bis 3, wobei Aggregate diskontinuierlicher Verstärkungsfasern enthalten sind, in denen jeweils ein sich aus einer Breite mindestens eines der Enden (3, 4) und einer Breite des am meisten aufgeweiteten Abschnitts (2) des Aggregats diskontinuierlicher Verstärkungsfasern (A) (1, 31) berechneter Aufweitungswinkel mehr als 5° beträgt, wobei

$$\text{Aufweitungswinkel} = \tan^{-1} \{(\text{Breite des am meisten aufgeweiteten Abschnitts (2)} - \text{Breite des Endes (3, 4))/2/Abstand zwischen dem Ende und dem am meisten aufgeweiteten Abschnitt (2)}\}$$

5. Verstärkungsfaser-Verbundmaterial nach einem der Ansprüche 1 bis 4, wobei eine zahlenmittlere Faserlänge der diskontinuierlichen Verstärkungsfasern 5 mm oder mehr und weniger als 100 mm beträgt.

6. Verstärkungsfaser-Verbundmaterial nach einem der Ansprüche 1 bis 5, wobei beide Enden (3, 4) des Aggregats diskontinuierlicher Verstärkungsfasern (A) (31) mit einem Winkel von 2° bis 30° in Bezug auf die Ausrichtungsrichtung (6) von diskontinuierlichen Verstärkungsfasern in dem Aggregat diskontinuierlicher Verstärkungsfasern (A) (31) geschnitten sind.

7. Verstärkungsfaser-Verbundmaterial nach einem der Ansprüche 1 bis 6, wobei die diskontinuierlichen Verstärkungsfasern Kohlenstofffasern enthalten.

**Revendications**

1. Matériau composite à fibres de renforcement comprenant au moins une résine matricielle et des fibres de renforcement discontinues qui comprennent des agrégats de fibres de renforcement discontinues, où lesdites fibres de renforcement discontinues comprennent au moins 5% en poids d'agrégats de fibres de renforcement discontinues (A) (1, 31) dans chacun desquels une section la plus élargie (2), où la largeur de l'agrégat de fibres de renforcement discontinues (1, 31) dans une direction croisant une direction d'alignement (6) desdites fibres de renforcement discontinues est rendue maximale lorsque l'agrégat de fibres de renforcement discontinues (1, 31) est projeté de manière bidimensionnelle, est présente à une position excluant les deux extrémités (3, 4) de l'agrégat de fibres de renforcement discontinues (1, 31), où le rapport d'aspect, qui est la largeur de l'agrégat de fibres de renforcement discontinues (1, 31)/l'épaisseur de l'agrégat de fibres de renforcement discontinues (1, 31) de la section la plus élargie (2) est supérieur ou égal à 1,3 fois le rapport d'aspect d'au moins l'une des extrémités (3, 4) de l'agrégat de fibres de renforcement discontinues (1, 31), **caractérisé en ce que**

des agrégats de fibres de renforcement discontinues, dans chacun desquels, par rapport à une épaisseur d'au moins l'une des extrémités (3, 4) et à une épaisseur de la section la plus élargie (2) dudit agrégat de fibres de renforcement discontinues (A) (1, 31), l'épaisseur de l'extrémité (3, 4)/l'épaisseur de la section la plus élargie (2) est supérieur ou égal à 1,2 et inférieur à 100, sont inclus et où les agrégats de fibres de renforcement discontinues ayant l'épaisseur de l'extrémité (3, 4)/l'épaisseur de la section la plus élargie (2) supérieur ou égal à 1,2 occupent 50% ou plus par rapport à la totalité des agrégats de fibres de renforcement discontinues (A) (1, 31).

2. Matériau composite à fibres de renforcement selon la revendication 1, dans lequel lesdits agrégats de fibres de renforcement discontinues (A) (1, 31) comprennent un agrégat de fibres de renforcement discontinues ayant un rapport d'aspect supérieur à 30 dans la section la plus élargie.

3. Matériau composite à fibres de renforcement selon la revendication 1 ou 2, dans lequel des agrégats de fibres de renforcement discontinues, dans chacun desquels, par rapport à une largeur d'au moins l'une des extrémités (3, 4) et à une largeur de la section la plus élargie (2) dudit agrégat de fibres de renforcement discontinues (A) (1, 31) lorsque ledit agrégat de fibres de renforcement discontinues (A) (1, 31) est projeté de manière bidimensionnelle, la largeur de la section la plus élargie (2)/la largeur de l'extrémité (3, 4) est supérieur ou égal à 1,3, sont inclus.

4. Matériau composite à fibres de renforcement selon l'une quelconque des revendications 1 à 3, dans lequel des agrégats de fibres de renforcement discontinues, dans chacun desquels un angle d'élargissement calculé à partir d'une largeur d'au moins l'une des extrémités (3, 4) et d'une largeur de la section la plus élargie (2) dudit agrégat de fibres de renforcement discontinues (A) (1, 31) est supérieur à 5°, sont inclus, où

$$\text{angle d'élargissement} = \tan^{-1}\{(\text{largeur de la section la plus élargie (2)} - \text{largeur de l'extrémité (3, 4)})/2/\text{distance entre l'extrémité et la section la plus élargie (2)}\}.$$

5. Matériau composite à fibres de renforcement selon l'une quelconque des revendications 1 à 4, dans lequel une longueur de fibre moyenne en nombre desdites fibres de renforcement discontinues est supérieure ou égale à 5 mm et inférieure à 100 mm.

6. Matériau composite à fibres de renforcement selon l'une quelconque des revendications 1 à 5, dans lequel les deux extrémités (3, 4) dudit agrégat de fibres de renforcement discontinues (A) (31) sont coupées selon un angle allant de 2° à 30° par rapport à la direction d'alignement (6) de fibres de renforcement discontinues dans l'agrégat de fibres de renforcement discontinues (A) (31).

7. Matériau composite à fibres de renforcement selon l'une quelconque des revendications 1 à 6, dans lequel lesdites fibres de renforcement discontinues contiennent des fibres de carbone.

**FIG. 1**

# FIG. 2

EP 3 252 093 B1

# FIG. 3

# FIG. 4

**REFERENCES CITED IN THE DESCRIPTION**

**Patent documents cited in the description**

- EP 2151418 A1
- JP 2009062474 A
- WO 2014201315 A
- WO 2014021316 A
- JP 2008254191 A